# EUROPEAN PATENT APPLICATION

(11) **EP 4 525 139 A1**
(43) Date of publication of application: **19.03.2025**
(21) Application number: 24174872.2
(22) Date of filing: 08.05.2024
(51) Int. Cl.: H01M 10/613, H01M 50/358, H01M 50/342, H01M 10/625, H01M 50/367, H01M 50/30, H01M 10/647, H01M 10/6556, H01M 50/209

(54) **BATTERY PACK**

(30) Priority: 18.09.2023 CN 202322541440 U; 18.09.2023 CN 202311207833
(71) Applicant: Eve Energy Co., Ltd., Huizhou, Guangdong 516006 (CN)
(72) Inventor: Wang, Yuanyuan, Huizhou, Guangdong, 516006 (CN); Yan, Shiwei, Huizhou, Guangdong, 516006 (CN); Liu, Huajun, Huizhou, Guangdong, 516006 (CN); Meng, Chenyang, Huizhou, Guangdong, 516006 (CN)
(74) Representative: Petraz, Gilberto Luigi

(57) **Abstract**

A battery pack includes a battery module and a cooling plate. The battery module includes a plurality of battery cells having respective pressure release valves, and the pressure release valves are located in a pressure release region. The cooling plate is disposed above the battery cells, and the cooling plate is provided with a cooling channel therein. The cooling plate is provided with a protruding portion, a protruding direction of the protruding portion is away from the battery cells, the protruding portion is provided at a position corresponding to the pressure release region, and the protruding portion is provided with a plurality of exhaust vents disposed at respective positions corresponding to the pressure release valves.

## Description

This application claims priority to Chinese patent applications No. 202311207833.0 and No. 202322541440.5, both of which are filed on September 18, 2023, and the disclosure of the applications are incorporated herein by reference in their entireties.

### TECHNICAL FIELD

The present application relates to the field of power battery technologies, and in particular to a battery pack.

### BACKGROUND

There are many factors affecting batteries safety, and thermal runaway is the fundamental cause for the safety issues. Therefore, heat dissipation components need to be disposed in a battery pack for battery cells thermal management, in order to reduce the temperature and burst pressure to improve the service life of the battery pack.

In related liquid cooling solutions, an opening is generally provided in a cooling plate near an explosion-proof valve of a battery cell for pressure release, thereby avoiding the high-temperature gas released from the battery cell having adverse effects on the cooling plate when the thermal runaway occurs to the battery cell. However, the electrical distance between the cooling plate and a conductive connector connecting the battery cells is relatively small, which causes insulation failure is more likely to occur at the pressure release opening in the cooling plate than other portions of the cooling plate.

To sum up, in light of the problem in the related art that the cooling plate is prone to insulation failure at the pressure release opening, a battery pack is provided in the present application to improve the problem.

### SUMMARY

The present application provides a battery pack, which may improve the problem that a cooling plate is prone to insulation failure at the pressure release opening.

The present application provides a battery pack, and the battery pack includes a battery module and a cooling plate. The battery module includes a plurality of battery cells having respective pressure release valves, and the pressure release valves are located in a pressure release region. The cooling plate is disposed above the battery cells, and the cooling plate is provided with a cooling channel therein. The cooling plate is provided with a protruding portion, a protruding direction of the protruding portion is away from the battery cells, the protruding portion is provided at a position corresponding to the pressure release region, and the protruding portion is provided with a plurality of exhaust vents disposed at respective positions corresponding to the pressure release valves.

In an embodiment, the cooling plate includes a first plate and a second plate that are stacked, the second plate is located at a side of the first plate away from the battery cells, and a portion of the first plate and the second plate are hermetically sealing connected, such that the cooling channel is formed; the protruding portion is provided on the first plate; and the second plate is provided with an opening at a position corresponding to the protruding portion, such that the protruding portion passes through the opening.

In an embodiment, the protruding portion includes a side wall and a platform that are connected to each other, and the exhaust vents are located in the platform.

In an embodiment, an included angle is formed between the side wall and the first plate, and the included angle is greater than 90° and less than 180°.

In an embodiment, a first rounded corner is formed at a junction between the side wall and a planar portion of the first plate, and a second rounded corner is formed at a junction between the side wall and the platform.

In an embodiment, a fillet radius of the first rounded corner is greater than 0.5 mm, a fillet radius of the second rounded corner is greater than 0.5 mm, and/or the fillet radius of the first rounded corner and the fillet radius of the second rounded corner are same or different.

In an embodiment, the battery pack also includes conductive connectors located above the battery cells, and the battery cells are electrically connected through the conductive connector; a vertical distance between a surface of the platform facing the battery cells and the conductive connectors is greater than or equal to 4 mm.

In an embodiment, a vertical distance between the surface of the platform facing the battery cells and a surface of the first plate facing the battery cells is less than 5 mm.

In an embodiment, a distance between an edge of the opening and an edge of a bottom of the protruding portion is greater than or equal to 3 mm.

In an embodiment, an edge of a projection of each exhaust vent on a plane where a corresponding pressure release valve is located is located outside a region where the corresponding pressure release valve is located.

In an embodiment, a distance between the edge of the projection of the exhaust vent on the plane where the corresponding pressure release valve is located and an edge of the corresponding pressure valve is greater than or equal to 2 mm.

In an embodiment, the first plate is provided with a channel bulge, a protruding direction of the channel bulge is toward the battery cells, and the channel bulge and a planar portion of the second plate are sealed to form the cooling channel; or the second plate is provided with a channel bulge, a protruding direction of the channel bulge is away from the battery cells, and the channel bulge and a planar portion of the first plate are sealed to form the cooling channel.

In an embodiment, a surface of the first plate facing the battery cells is provided with an insulating layer, and the cooling plate and the conductive connectors are isolated and insulated by the insulating layer.

In an embodiment, the cooling channel is distributed along a circumference of the protruding portion, and the cooling channel comprises: a main channel extending along a length direction of the protruding portion, and confluence channels located at two ends of the main channel, wherein each confluence channel extends along a width direction of the protruding portion and is connected to the main channel.

The embodiments of the present application have following benefits. For the battery pack provided in the present application, the battery pack includes the battery module and the cooling plate. The battery module includes the plurality of battery cells having respective pressure release valves, and the pressure release valves are located in the pressure release region. The cooling plate is disposed above the battery cells, and the cooling plate is provided with the cooling channel therein. The cooling plate is provided with the protruding portion, the protruding direction of the protruding portion is away from the battery cells, the protruding portion is provided at the position corresponding to the pressure release region, and the protruding portion is provided with the plurality of exhaust vents disposed at respective positions corresponding to the pressure release valves. The exhaust vents are arranged in the protruding portion in the present application, which increases the electrical distance between the plane where the exhaust vents are located and the pressure release valves of the battery cells, thereby ameliorating the problem that the insulation failure is prone to occur to the cooling plate at the exhaust vent(s).

### BRIEF DESCRIPTION OF THE DRAWINGS

In order to illustrate the technical solutions in the embodiments of the present application more clearly, accompany drawings needed to be used in the description of the embodiments will be introduced below.
FIG. 1 is a schematic structural diagram of a battery pack provided in embodiments of the present application;
FIG. 2 is an exploded perspective view of a cooling plate according to embodiments of the present application; and
FIG. 3 is a partial enlarged view of a cooling plate according to embodiments of the present application.

### DETAILED DESCRIPTION

The technical solutions in the embodiments of the present application will be clearly and completely described below with reference to the accompanying drawings in the embodiments of the present application. Obviously, the embodiments described are only some of the embodiments of the present application, rather than all of the embodiments. Based on the embodiments in the present application, all other embodiments obtained by those skilled in the art without creative efforts fall within the scope of protection of the present application. In addition, it will be understood that the specific embodiments described herein are only used to illustrate and describe the application, and are not used to limit the present application. In the present application, unless otherwise specified, directional words used such as "upper" and "lower" usually refer to the upper and lower positions of the device in actual use or working conditions, specifically the directions in the drawings, and "inside" and "outside" are relative to the outline of the device.

In addition, terms "first" and "second" are used for descriptive purposes only and cannot be understood as indicating or implying relative importance or implicitly indicating the quantity of indicated technical features. Thus, a feature defined with "first" or "second" may explicitly or implicitly include one or more of the described features.

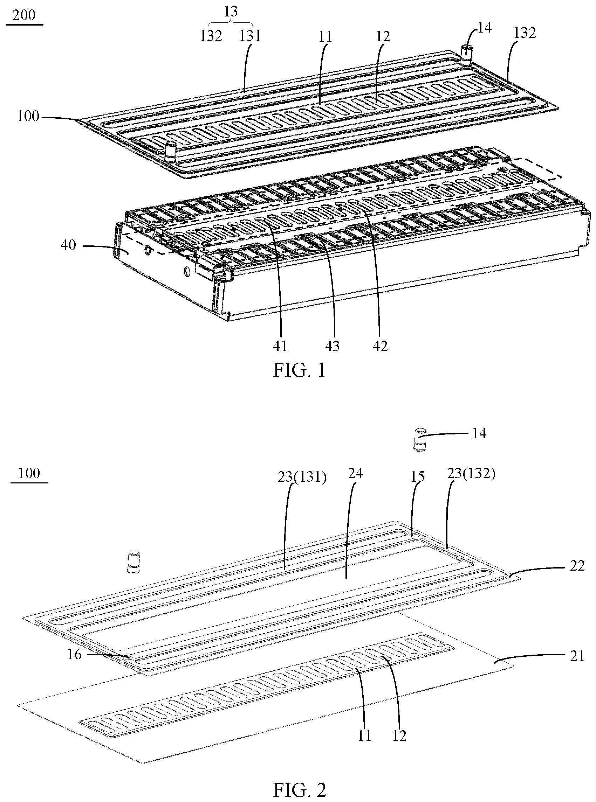

As shown in FIG. 1, a battery pack 200 is provided in embodiments of the present application, and the battery pack 200 includes a battery module 40 and a cooling plate 100. The battery module 40 includes a plurality of battery cells, each battery cell has a pressure release valve 41. The region where the pressure release valves 41 of the plurality of battery cells are located is defined as a pressure release region 42. The cooling plate 100 is disposed above the battery cells, and the cooling plate 100 is provided with a cooling channel 13 therein. The cooling plate 100 is provided with a protruding portion 11, and a protruding direction of the protruding portion 11 is away from the battery cells. The protruding portion 11 is provided at a position corresponding to the pressure release region 42, and the protruding portion 11 is provided with a plurality of exhaust vents 12 disposed at respective positions corresponding to the pressure release valves 41.

The exhaust vents 12 are disposed in the protruding portion 11 in embodiments of the present application, which increases the electrical distance between the plane where the exhaust vents 12 are located and the pressure release valves 41 of the battery cells, thereby ameliorating the problem that the insulation failure is prone to occur to the cooling plate 100 at each exhaust vent 12.

In embodiments of the present application, the number of the exhaust vents 12 corresponds to the number of the battery cells, so that the pressure release valve 41 of each battery cell has a one-to-one correspondence with an exhaust vent 12 to achieve pressure release. For example, the plurality of exhaust vents 12 are arranged at intervals along the length direction of the cooling plate 100.

For example, in the embodiments, the cooling plate 100 is made of aluminum alloy composite material, such as an aluminum material AL3003.

In the embodiments, the pressure release valves 41 of the battery cells are located at the top of the battery cells. It will be known that, when a battery cell releases pressure, the temperature of the out-of-control gas is as high as 500°C to 1000°C, and the high-temperature gas may cause the cooling plate to melt through. At the same time, the gas released from the battery cell cannot be vented out due to the block of the cooling plate, which causes an explosion. In the embodiments of the present application, the cooling plate 100 is provided with the exhaust vents 12 at positions corresponding to the pressure release valves 41 of the battery cells, thereby avoiding the high-temperature gas from melting through the liquid-cooling plate 100 and avoiding the explosion caused by the poor venting of the high-temperature gas.

In the embodiments, an edge of a projection of each exhaust vent 12 on a plane where the corresponding pressure release valve 41 is located is located outside a region where the pressure release valve 41 is located. By arranging that the edge of the projection of each exhaust vent 12 on the plane where the corresponding pressure release valve 41 is located is located outside the region where the pressure release valve 41 is located, it avoids that the high-temperature gas ejected from the corresponding pressure release valve 41 melts through the edge of the exhaust vent 12 and causes abnormality of the exhaust vent 12, thereby avoiding the poor venting of high-temperature gas. For example, a distance between the edge of the projection of the exhaust vent 12 on the plane where the corresponding pressure release valve 41 is located and an edge of the corresponding pressure release valve 41 is greater than or equal to 2 mm

In the embodiments, each battery cell also has a positive electrode and a negative electrode. The positive electrode and the negative electrode of the battery cell may be arranged on the same side as the pressure release valve 41 or on an opposite side from the pressure release valve 41. For example, the positive electrode and the negative electrode of the battery cell are located on the opposite side from the pressure release valve 41 of the battery cell, which avoids the electrodes from being short-circuited or arcing due to the materials sprayed from the battery cell, thereby effectively improving the safety of the battery pack 200.

In some embodiments, each exhaust vent 12 may be a waist-type hole. In other optional embodiments, the shape of each exhaust vent 12 may be a circle, a rectangle, or other shape.

As shown in FIG. 2, the cooling plate 100 includes a first plate 21 and a second plate 22 that are stacked. The second plate 22 is located at a side of the first plate 21 away from the battery cells. The protruding portion 11 (and the exhaust vents 12) is disposed on the first plate 21; the second plate 22 is provided with an opening 24 such that the protruding portion 11 passes through the opening 24. Optionally, the opening 24 is formed by stamping.

It will be noted that, in a case where the second plate 22 is provided with exhaust vents corresponding to the exhaust vents in the first plate 21, due to process errors in the alignment process of the first plate 21 and the second plate 22, it is extremely easy to cause the exhaust vents in the first plate 21 and the exhaust vents in the second plate 22 to be misaligned, and thus cause some of the exhaust vents to be blocked. As a result, the gas release effect of the cooling plate 100 is affected. In the present application, the opening 24 is provided in the second plate 22 at a position corresponding to the protruding portion 11, such that the protruding portion 11 provided with the exhaust vents 12 passes through the opening 24. The opening 24 plays a role of limiting, which effectively avoids the problem that some of the exhaust vents are blocked due to the misalignment between the first plate 21 and the second plate 22.

In embodiments of the present application, a distance between an edge of the opening 24 and an edge of a bottom of the protruding portion 11 is greater than or equal to 3 mm. By providing a certain distance between the edge of the opening 24 and the bottom edge of the protruding portion 11, the assembly of the first plate 21 and the second plate 22 is made easier.

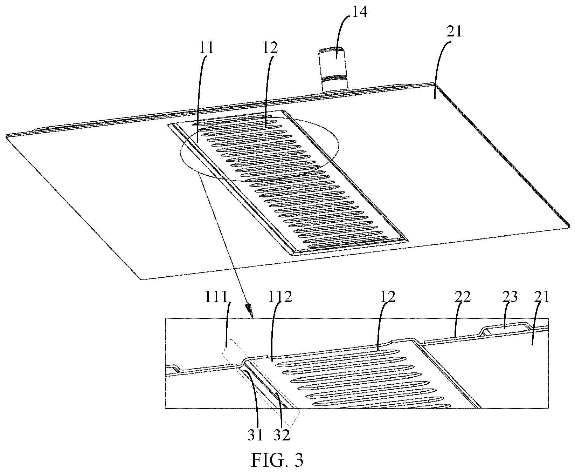

As shown in FIGS. 1 to 3, the protruding portion 11 includes a side wall 111 and a platform 112 that are connected to each other, and the exhaust vents 12 are located in the platform 112. A first rounded corner 31 is formed at a junction between the side wall 111 and a planar portion of the first plate 21, and a second rounded corner 32 is formed at a junction between the side wall 111 and the platform 112.

In embodiments of the present application, an included angle is formed between the side wall 111 and the first plate 21, and the included angle is greater than 90° and less than 180°, such that a cross-sectional profile of the protruding portion 11 is trapezoidal. By setting the included angle between the side wall 111 and the first plate 21 to be an obtuse angle, it is advantageous to smoothly withdraw the protruding portion 11 from the stamped die after punch forming.

A surface of the first plate 21 facing the battery cells is provided with an insulating layer (not shown in the figures). Optionally, the insulating layer is formed by spraying insulating powders, and the material of the insulating layer includes but is not limited to boron nitride.

The battery pack 200 also includes conductive connectors 43, the conductive connectors 43 are located between the cooling plate 100 and the battery cells, and the battery cells are electrically connected through the conductive connectors 43. The cooling plate 100 and the conductive connectors 43 are isolated and insulated by the insulating layer therebetween. Optionally, the conductive connectors 43 are made of aluminium.

In a case where the distance between the cooling plate 100 and the conductive connectors 43 is relatively small, if adopting a high voltage platform of 400V or even 800V, insulation failure will occur when the electrical distance is too small or the voltage resistance is low, and in severe cases, arcing and sparking may occur, which causes the entire battery pack to catch fire and get out of control. Therefore, the cooling plate 100 needs to be insulated and protected. In the embodiments, insulating powders are sprayed on the surface of the first plate 21 facing the battery cells, thereby isolating the cooling plate 100 and the conductive connectors 43.

It will be noted that, the principle of the insulating powders spraying is mainly electrostatic adherence. Due to the electrostatic forces, fine insulating powders are adhered to the surface of the first plate 21 facing the battery cells during the spraying process. Therefore, the resulted surface of the first plate 21 is smooth and burr-free in the embodiments of the present application.

It will be noted that in the related art, portions of a cooling plate corresponding to the pressure release valves 41 of the battery cells are usually punched directly to form openings. However, when punching the opening of the cooling plate, a right-angled portion which refers to the junction between a vertical wall of the opening and the horizontal surface of the cooling plate is unavoidably generated, which affects the electrostatic adherence. The junction is essentially a junction line, which cannot provide a good adhesive surface for the insulating powders. Since the right-angled portion generated by punching the opening cannot perform good electrostatic adherence, the layer formed by the insulating powders in this region has too low thickness during spraying and has poor voltage resistance. When a large current passes through this region, the insulating powders are easily broken down by the current, leading to insulation failure.

In embodiments of the present application, the protruding portion 11 can be formed by stamping a portion of the cooling plate 100 at a position corresponding to the pressure release region 42, and the exhaust vents 12 can be formed by punching in the platform 112 of the protruding portion 11. Considering that right-angle portions are unavoidable generated when punching the exhaust vents 12 to remove the material therein, the exhaust vents 12 are arranged in the protruding portion 11 in the present application, which increases the electrical distance between the plane where the exhaust vents 12 are located and the conductive connectors 43. The issue of the potential insulation failure of the cooling plate 100 at the exhaust vents 12 is relieved by increasing the electrical distance without changing the voltage resistance of the right-angle portions of the exhaust vents 12.

In embodiments of the present application, a vertical distance between a surface of the platform 112 facing the battery cells and the conductive connectors 43 is greater than or equal to 4 mm (such as 4 mm or 4.5 mm), so that there is a sufficient electrical distance between the right-angled portions of the exhaust vents 12 and the conductive connectors 43, thereby avoiding the right-angled portions of the exhaust vents 12 from being broken down by a current and causing insulation failure.

In embodiments of the present application, a height of the protruding portion 11 is less than 5 mm (for example, the height is 3.5 mm, 4 mm or 4.5 mm). It will be noted that the height of the protruding portion 11 refers to a vertical distance between the surface of the platform 112 facing the battery cells and the surface of the first plate 21 facing the battery cells. Since the material of the cooling plate has a certain rupture strength, if the height of the protruding portion 11 is too large, the thickness of the protruding portion 11 may be too small or the protruding portion 11 may even be cracked, causing failure of the cooling plate or other safety issues. For example, the shape of the exhaust vent(s) 12 may be damaged, resulting in explosion due to the poor venting of the gases generated when the battery cell is thermally out of control.

In embodiments of the present application, the first rounded corner 31 is formed at a junction between the side wall 111 and a planar portion of the first plate 21, and/or, the second rounded corner 32 is formed at a junction between the side wall 111 and the platform 112. The first rounded corner 31 and the second rounded corner 32 are both formed by stamping and drawing. The first rounded corner 31 and the second rounded corner 32 are formed, so that the junction between the side wall 111 and the planar portion of the first plate 21 and the junction between the side wall 111 and the platform 112 have smooth curved surface. As a result, the curved surfaces allow good electrostatic adherence during insulating powders spraying, thereby providing an insulating layer with satisfying film thickness to improve the voltage resistance of the cooling plate 100. Therefore, the problem of insulation failure may be avoided. In addition, the distance to the conductive connector 43 at the junction of the side wall 111 and the planar portion of the first plate 21 is close, and the electrical distance therebetween is small. Thus, by forming the first rounded corner 31 at the junction, this region may have a layer of insulating powders with a good thickness, thereby avoiding the insulating powders there from being broken down by a large current passing through this region, and in turn avoiding insulation failure.

In embodiments of the present application, a fillet radius of the first rounded corner 31 is greater than 0.5 mm, a fillet radius of the second rounded corner 32 is greater than 0.5 mm, and the fillet radius of the first rounded corner 31 and the fillet radius of the second rounded corner 32 are the same as or different. It will be understood that, the larger a fillet radius is, the flatter the fillet surface is. Therefore, the fillet radius of the first rounded corner 31 and the fillet radius of the second rounded corner 32 may be increased to improve their adhesive capacity for insulating powders, thereby increasing their voltage resistance to avoid insulation failure.

It will be noted that, in the present application, the exhaust vents 12 are formed in the protruding portion 11 to increase the electrical distance between the cooling plate 100 and the pressure release valves 41 of the battery cells. Even if the right-angle portions are still generated at the exhaust vents 12 when punching and removing the material, the problem that the cooling plate 100 is prone to insulation failure at the exhaust vents 12 may be ameliorated due to the increased electrical distance, as well as the relatively thick insulating layer covering the entire protruding portion 11 and the junction between the protruding portion 11 and the planar portion of the first plate 21 and the resulted good voltage resistance.

For example, as shown in FIGS 1 and 2, the cooling channel 13 is provided in the cooling plate 100. In some embodiments, a portion of the first plate 21 and the second plate 22 are hermetically sealing connected such that the cooling channel 13 is formed. For example, the hermetically sealing connection manner of the first plate 21 and the second plate 22 includes but is not limited to brazing.

It will be noted that, in a case where the second plate 22 is provided with exhaust vents corresponding to the exhaust vents in the first plate 21, when the first plate 21 and the second plate 22 are hermetically sealing connected, due to process errors in the alignment process of the first plate 21 and the second plate 22, it is extremely easy to cause the exhaust vents in the first plate 21 and the exhaust vents in the second plate 22 to be misaligned, and thus cause some of the exhaust vents to be blocked. As a result, the gas release effect of the cooling plate 100 is affected.

In the present application, the opening 24 is provided in the second plate 22 at the position corresponding to the protruding portion 11, such that the protruding portion 11 provided with the exhaust vents 12 passes through the opening 24. The opening 24 plays a role of limiting, which helps the cooling channel 13 be formed after the hermetically sealing connection process, and effectively avoids the problem that some of the exhaust vents are blocked due to the misalignment between the first plate 21 and the second plate 22.

For example, the first plate 21 is provided with a channel bulge 23, whose protruding direction is toward the battery cells, and the channel bulge 23 and the planar portion of the second plate 22 are sealed to form the cooling channel 13.

In other embodiments, the second plate 22 is provided with a channel bulge 23, whose protruding direction is away from the battery cells, and the channel bulge 23 and the planar portion of the first plate 21 are sealed to form the cooling channel 13.

As shown in FIGS. 1 and 2, in embodiments of the present application, the cooling channel 13 is disposed around the protruding portion 11, and the cooling channel includes main channels 131 extending along a length direction of the protruding portion 11 and confluence channels 132 located at two ends of each main channel. Each confluence channel 132 extends along a width direction of the protruding portion 11 and is connected to the main channels 131. The cooling material in the main channels 131 undergoes balanced flow diversion and confluence in the confluence channels 132, so that the cooling material circulates in the cooling channel 13.

In embodiments of the present application, the coolant may be water, which has characteristics of large specific heat capacity and low cost. In other optional embodiments, the cooling material may be other types of liquid. The cooling material may also include a material in other form, such as in gas or solid.

In embodiments of the present application, the second plate 22 is provided with a first opening 15 and a second opening 16 located in respective confluence channels 132 for realizing the communication between the cooling channel 13 and the outside of the cooling plate 100.

For example, the first opening 15 and the second opening 16 are arranged diagonally in the cooling plate 100. Optionally, the first opening 15 is an inlet for the cooling material, and the second opening 16 is an outlet for the cooling material. Alternatively, the second opening 16 is the inlet for the cooling material, and the first opening 15 is the outlet for the cooling material.

In embodiments of the present application, the cooling plate 100 also includes nozzles 14. The nozzles 14 are located at the first opening 15 and the second opening 16 and are connected to the external cooling liquid pipelines, so that the first opening 15 and the second opening 16 are connected to the outside of the cooling plate 100. Optionally, the nozzles 14 are connected to the second plate 22 through a brazing process.

The embodiments of the present application have been introduced in detail above. Specific examples are used herein to illustrate the principles and implementation methods of the present application. The description of the above embodiments is only used to help understand the method and the core idea of the present application. In addition, based on the ideas of the present application, those skilled in the art can make changes in the specific implementation and application scope. In summary, the content of the specification should not be interpreted as limiting the protection scope of the present application.

## Claims

1. A battery pack, **characterized in that** the battery pack comprises:
a battery module (40) comprising a plurality of battery cells having respective pressure release valves (41), the pressure release valves (41) being located in a pressure release region (42); and
a cooling plate (100) disposed above the battery cells, wherein the cooling plate (100) is provided with a cooling channel (13) therein;
wherein the cooling plate (100) is provided with a protruding portion (11), a protruding direction of the protruding portion (11) is away from the battery cells, the protruding portion (11) is provided at a position corresponding to the pressure release region (42), and the protruding portion (11) is provided with a plurality of exhaust vents (12) disposed at respective positions corresponding to the pressure release valves (41).

2. The battery pack according to claim 1, **characterized in that** the cooling plate (100) comprises a first plate (21) and a second plate (22) that are stacked, the second plate (22) is located at a side of the first plate (21) away from the battery cells, and a portion of the first plate (21) and the second plate (22) are hermetically sealing connected, such that the cooling channel (13) is formed, wherein
the protruding portion (11) is provided on the first plate (21); and
the second plate (22) is provided with an opening (24) at a position corresponding to the protruding portion (11), such that the protruding portion (11) passes through the opening (24).

3. The battery pack according to claim 1 or 2, **characterized in that** the protruding portion (11) comprises a side wall (111) and a platform (112) that are connected to each other, and the exhaust vents (12) are located in the platform (112).

4. The battery pack according to claim 3, **characterized in that** an included angle is formed between the side wall (111) and the first plate (21), and the included angle is greater than 90° and less than 180°.

5. The battery pack according to claim 3, **characterized in that** a first rounded corner (31) is formed at a junction between the side wall (111) and a planar portion of the first plate (21), and a second rounded corner (32) is formed at a junction between the side wall (111) and the platform (112).

6. The battery pack according to claim 5, **characterized in that** a fillet radius of the first rounded corner (31) is greater than 0.5 mm, and/or a fillet radius of the second rounded corner (32) is greater than 0.5 mm.

7. The battery pack according to claim 6, **characterized in that** the fillet radius of the first rounded corner (31) and the fillet radius of the second rounded corner (32) are same.

8. The battery pack according to any one of claims 1 to 7, **characterized in that** the battery pack also comprises conductive connectors (43) located above the battery cells, and the battery cells are electrically connected through the conductive connectors (43);
wherein a vertical distance between a surface of the platform (112) facing the battery cells and the conductive connectors (43) is greater than or equal to 4 mm.

9. The battery pack according to claim 8, **characterized in that** a vertical distance between the surface of the platform (112) facing the battery cells and a surface of the first plate (21) facing the battery cells is less than 5 mm.

10. The battery pack according to claim 2, **characterized in that** a distance between an edge of the opening (24) and an edge of a bottom of the protruding portion (11) is greater than or equal to 3 mm.

11. The battery pack according to any one of claims 1 to 10, **characterized in that** an edge of a projection of each exhaust vent (12) on a plane where a corresponding pressure release valve (41) is located is located outside a region where the corresponding pressure release valve (41) is located.

12. The battery pack according to claim 11, **characterized in that** a distance between the edge of the projection of the exhaust vent (12) on the plane where the corresponding pressure release valve (41) is located and an edge of the corresponding pressure valve (41) is greater than or equal to 2 mm.

13. The battery pack according to claim 2, **characterized in that** the first plate (21) is provided with a channel bulge (23), a protruding direction of the channel bulge (23) is toward the battery cells, and the channel bulge (23) and a planar portion of the second plate (22) are sealed to form the cooling channel (13); or
the second plate (22) is provided with a channel bulge (23), a protruding direction of the channel bulge (23) is away from the battery cells, and the channel bulge (23) and a planar portion of the first plate (21) are sealed to form the cooling channel (13).

14. The battery pack according to claim 8 or 9, **characterized in that** a surface of the first plate (21) facing the battery cells is provided with an insulating layer, and the cooling plate (100) and the conductive connectors (43) are insulated by the insulating layer.

15. The battery pack according to any one of claims 1 to 14, **characterized in that** the cooling channel (13) is disposed around the protruding portion (11), and the cooling channel (13) comprises main channels (131) extending along a length direction of the protruding portion (11) and confluence channels (132) located at two ends of each main channel (131), wherein each confluence channel (132) extends along a width direction of the protruding portion (11) and is connected to the main channels (131).
